## Europäisches Patentamt

**European Patent Office**

**Office européen des brevets**

(11) Veröffentlichungsnummer: **0 011 774**
**A1**

(12) **EUROPÄISCHE PATENTANMELDUNG**

(21) Anmeldenummer: **79104503.2**

(22) Anmeldetag: **15.11.79**

(51) Int. Cl.³: **F 24 D 3/00**

(30) Priorität: **18.11.78 DE 2850196**

(43) Veröffentlichungstag der Anmeldung:
**11.06.80 Patentblatt 80 ′12**

(84) Benannte Vertragsstaaten:
**AT BE CH FR GB IT LU NL SE**

(71) Anmelder: **Peters, Erhard**
**Schweriner Strasse 2**
**D-5400 Koblenz(DE)**

(72) Erfinder: **Peters, Erhard**
**Schweriner Strasse 2**
**D-5400 Koblenz(DE)**

(54) **Vorgefertigte Fussbodenplatten mit Heizkanälen für Heizrohre und Verwendung dieser Platten für einen Fussboden.**

(57) Bei diesen vorgefertigten Fußbodenplatten handelt es sich um untere Heiz-Estrichplatten (3, 13) und obere Abdeck-Estrichplatten (2, 12), in welche, dazwischenliegend, Heizrohre (4) oder Heizkabel in besonderen Heizkanälen (8, 18) eingelegt sind.

Eine besondere Ausführungsart liegt darin, daß die unteren Platten (13) und die oberen Platten (12) identisch sind und gegeneinander, vorzugsweise um eine halbe Platte in jeder Richtung, versetzt sind, wobei die unteren Platten (13) und die oberen Platten (12) jeweils die dazwischen liegenden Heizrohre (4) oder Heizkabel zur Hälfte umschließen. Für die genaue Ausrichtung sind Paßkörper (19) eingelegt. Bei zusätzlicher Verklebung ergibt sich eine geschlossene, einheitlich tragfähige Fußbodenplatte.

Zur Herstellung werden zweckmäßigerweise Materialien mit hoher Wärmekapazität, beispielsweise Feinbeton, Betonwerkstein, Keramik mit und ohne Faserverstärkung, verwendet.

Werden die oberen Abdeckplatten mit vergüteter Oberfläche, wahlweise mit Mustern oder Dekoren, hergestellt, kann auf einen zusätzlichen Bodenbelag verzichtet werden.

Fig 4

.../...

Croydon Printing Company Ltd.

Fig 5

Diplom-Ingenieur

Erhard Peters

Schweriner Str. 2

5400 Koblenz

## Vorgefertigte Fußbodenplatten mit Heizkanälen für Heizrohre

Die vorliegende Erfindung bezieht sich auf vorgefertigte Fußbodenplatten mit Heizkanälen für Heizrohre.

Fußbodenheizungen haben eine Reihe von Vorzügen, insbesondere eine gleichmäßige Erwärmung der Fußböden. Bisher werden dabei beim Verlegen der Isoliermatten Kanäle freigelassen, in welche die Heizrohre eingelegt werden können. Nach dem Verlegen der Heizrohre werden die Kanäle mit dünnen Metallblechen abgedeckt und darauf der Estrich aufgebracht. Nach einer anderen Ausführungsart wird die Wärme- und Trittschallisolierung in üblicher Weise eben auf den Rohfußboden aufgebracht. Vor dem Aufbringen des flüssigen Estriches auf die Isolierung werden Schalungen verlegt, um nach dem Aushärten des Estriches Kanäle für Heizrohre zu erhalten.

Es werden auch vorgefertigte Fußbodenplatten mit Heizkanälen für Heizrohre hergestellt. Diese Fußbodenplatten bilden das Isoliermaterial, welches auf den Rohfußboden aufgelegt wird. Diese Fußbodenplatten werden sodann mit dünnen ebenen Blech- oder Stahlplatten abgedeckt, auf welche in üblicher Weise der flüssige Estrich aufgebracht wird.

Durch das Aussparen von Kanälen innerhalb der Isolierschicht wird die Wärmedämmung und noch viel mehr die Trittschalldämmung in empfindlicher Weise verringert. Dies gilt sowohl für eine Aussparung von Heizkanälen für Heizrohre beim Verlegen selbst als auch bei der Verwendung von vorgefertigten Fußboden platten aus Isoliermaterial. Die verwendeten Abdeckplatten aus Metall sind oftmals nicht ganz korrosionsfrei, so daß die Lebensdauer einer derartigen Anordnung begrenzt ist. Das Aufbringen von flüssigem Estrich auf diese Abdeckplatten bringt die Gefahr mit sich, daß an den Überlappungsstellen der Abdeck platten flüssiger Estrich in die Kanäle eindringt und Wärme- und Schallbrücken zwischen Heizrohr, Isolierung und Rohfußbode bildet. Nach dem Aufbringen von flüssigem Estrich auf die Abde platten ist keine Reparatur des Heizsystems mehr möglich, ohne den gesamten Estrich zu zerstören. Durch das Aufbringen von flüssigem Estrich sind Wartezeiten in Kauf zu nehmen, da diese Belag nicht sofort belastet werden kann. Darüber hinaus könner Feuchtschäden auftreten. Das Aufbringen von flüssigem Estrich erfordert den Einsatz von ausgebildeten Fachkräften. Verzichte man auf Schalungen zum Anbringen der Heizkanäle und bringt der flüssigen Estrich direkt auf die Heizrohre auf, so ergeben sic Probleme mit der Ausdehnung der Heizrohre, was zu Spannungen u Brücken führen kann. Dies ist insbesondere bei Verwendung von ansonsten praktischen und preiswerten Kunststoffheizrohren der Fall, da diese einen großen Wärmeausdehnungskoeffizienten habe

Bei einer Verlegung der Heizrohre in Kanälen innerhalb der Isolierung ist auch die Wärmeverteilung ungünstig, da sie örtlich nach unten in Richtung auf die Decke und nach oben in Ri tung auf den Estrich wirkt, nicht jedoch horizontal, da dies durch die angrenzende Isolierung verhindert wird. Dadurch kom lediglich eine örtliche Erwärmung der Decke sowie des Fußbode zustande, während die zwischen den Heizrohren liegenden Berei kalt bleiben. Da Isoliermaterialien eine sehr niedrige Wärmekapazität aufweisen, ist praktisch keine Wärmespeicherung möglich, die für ein ausgewogenes Wärmegleichgewicht sorgt, unabhängig von kurzfristigen Temperaturschwankungen.

Die Heizkanäle für die Heizrohre sind bei all diesen bekannten Systemen im allgemeinen streng vorgegeben, so daß man an das gewählte Heizrohrsystem und die gewählte Anordnung gebunden ist. Stellt sich nachträglich heraus, daß das Heizrohrsystem unter- oder überdimensioniert ist, so ist keine Änderung mehr möglich.

Die Erfindung stellt sich die Aufgabe, vorgefertigte Fußbodenplatten mit Heizkanälen für Heizrohre so auszubilden, daß eine einfache Trockenverlegung möglich ist, die Heizrohre variabel verlegt werden können, eine nachträgliche Reparatur des Heizsystems möglich ist, die Wärme- und Trittschallisolierung nicht beeinträchtigt wird und eine Wärmespeicherung sowie eine gute Wärmeverteilung erfolgt.

Die Aufgabe wird erfindungsgemäß durch die Merkmale des kennzeichnenden Teiles des Anspruches 1 gelöst. Weitere Ausgestaltungen der Erfindung sind in den Unteransprüchen dargestellt.

Nach der Erfindung sind Estrichplatten vorgesehen, in welche die Heizkanäle derart eingesenkt sind, daß dazwischeragende Noppen entstehen. Die Heizestrichplatten werden durch darüberliegende Abdeck-Estrichplatten abgedeckt. Die vorgefertigten Fußbodenplatten bestehen also aus unteren Heizestrichplatten und darüber angeordneten Abdeck-Estrichplatten, wobei in den Estrichplatten Heizkanäle für die Heizrohre vorgesehen sind. Beim Verlegen auf einem üblichen Fußboden bleibt somit die unter den Heizestrichplatten angeordnete Isolierung völlig unbeeinträchtigt. Diese kann ebenso trocken und einfach verlegt werden, wie die erfindungsgemäßen vorgefertigten Fußbodenplatten. Durch die Ausbildung der Noppen, die vorzugsweise kreisförmig ist, entstehen dazwischen große eingesenkte Bereiche, in denen eine sehr variable Verlegung von Heizrohren möglich ist. Beliebige Arten von Heizrohren können verlegt werden, sei es mit Wasser gefüllte Heizrohre aus Stahl, aus Kupfer oder aus Kunststoff, oder seien es elektrische, isolierte, stromführende Heizkabel.

Auf den montierten vorgefertigten Fußbodenplatten kann unmittelbar ein Bodenbelag aufgebracht werden. Es kann aber auch bereits die Oberfläche der Abdeckplatten vergütet sein, so daß kein zusätzlicher Bodenbelag mehr erforderlich ist. Lediglich durch Abheben der oberen Abdeck-Estrichplatten kann das Heizsystem repariert oder auch geändert werden, beispielsweise kann die Wärmekapazität durch Verlegen anderer Heizrohre erhöht oder verringert werden.

Da das Estrichmaterial im Gegensatz zum Isoliermaterial im allgemeinen aus spezifisch dichteren Materialien mit höherer Wärmeleitung hergestellt ist, wird die von den Heizrohren ausgeh de Wärme in kürzester Zeit gleichmäßig über den ganzen Estrich verteilt, wo sie gleichmäßig auf den Fußbodenbelag einwirkt. Durch die Isolierung hindurch wird ein Teil der Wärme auch gleichmäßig auf die Decke übertragen. Durch die Wahl der Dicke der Isolierung, die auf dem Rohfußboden aufliegt, kann man das Verhältnis der an der unteren Decke austretenden Wärme festlegen Durch die Wärmekapazität des Estriches, in welchem die Heizrohre eingebaut sind, ist eine Wärmespeicherung und damit ein angenehmeres, gleichmäßigeres Wohnklima möglich.

Nach einer Ausführungsform sind die Einsenkungen der Heizkanäle so tief, daß sie die Heizrohre vollständig aufnehmen können. In diesem Falle können die oberen Abdeck-Estrichplatten eben ausgebildet sein.

Nach einer anderen Ausführungsform weisen die Heizestrichplatten und die Abdeck-Estrichplatten identischen Aufbau auf, wobei die Heizkanäle halb so tief abgesenkt sind, wie es der Außendicke der Heizrohre entspricht. Auf diese Weise ist eine besonders einfache Herstellung möglich. Auch die Lagerhaltung wird vereinfacht, da nur eine einzige Art von Platte notwendig ist.

Im letzteren Fall ist es natürlich notwendig, daß die Heizkanäle bzw. die übrig bleibenden Noppen genau aufeinandergelegt werden. Um dies zu erleichtern, ist es zweckmäßig, in den Noppen, vorzugsweise in der Mitte, Vertiefungen zur Aufnahme von Paßkörpern vorzusehen. Diese Vertiefungen können beispielsweise die Form von Kugelkalotten aufweisen, wobei die Paßkörper die Form von Kugeln haben, oder es können Bohrungen sein, in welche stiftförmige Paßkörper eingesteckt werden. Auf diese Weise ist die Lage der oberen Abdeck-Estrichplatten gegenüber den darunter angeordneten Heiz-Estrichplatten genau definiert. Das Verlegen der oberen auf den unteren Platten erfolgt so, daß die Kanten gegeneinander versetzt sind, in der Weise, daß die Ecken der oberen Platten auf der Mitte der unteren Platten liegen. Auf diese Weise werden Wärme- und Schallbrücken zwischen den beiden Platten vermieden und eine Lastverteilung auf die Platten erreicht. Bei zusätzlicher Verklebung ergibt sich eine einheitliche, voll tragfähige Fußbodenplatte.

Als Material für die Heizestrichplatten und die Abdeck-Estrichplatten wird vorzugsweise ein Sand-Zement-Estrich oder Gips-Estrich gewählt. Diese Materialien haben sich bewährt, sie sind relativ preiswert, fest und weisen günstige Eigenschaften bezüglich der Wärmeleitung und Wärmekapazität auf. Bei Bedarf, insbesondere bei Verwendung größerer Platten, können die Heiz-Estrichplatten und/oder die Abdeck-Estrichplatten durch Gewebe aus Betonstahl, Stahlfasern, Glasfasern, Asbestfasern, Kunststoffasern oder Kohlenstoffasern verstärkt werden.

Auch Feinbeton oder Bitumenasphalt lassen sich vorteilhaft als Material für die Heizestrichplatten , bzw. die Abdeck-Estrichplatten, einsetzen. Auch diese Materialien können durch Gewebe aus Betonstahl, Stahlfasern, Glasfasern, Asbestfasern, Kunststoffasern oder Kohlenstoffasern verstärkt werden. Als Estrichmaterial kann auch Holz, insbesondere verarbeitetes Holz wie Spanblatten, Sperrholzplatten etc.,verwendet werden.

Die Fußbodenplatten können auch aus Keramikmaterial, Betonwerkstein, Kunststein oder Kunstmarmor hergestellt werden.
Eine besondere Ausführungsform liegt darin, daß die Abdeck-
Estrichplatten mit einseitig vergüteter Oberfläche, wahlweise
auch mit Mustern und Dekoren, ausgestattet werden und damit
die bereits fertige Fußbodenfläche bilden.

Zweckmäßigerweise sind die Heiz-Estrichplatten und die Abdeck
Estrichplatten etwa 20 - 30 mm dick und haben eine Oberfläche
von etwa 500 x 500 mm bis 750 x 750 mm.

Das Hauptanwendungsgebiet der vorgefertigten Fußbodenplatten
nach der Erfindung sind Fußböden, wobei auf einen Rohfußbode
eine Wärme- und Trittschallisolierung aufgebracht ist, auf
welche die Heiz-Estrichplatten aufgelegt sind, wobei weiterh
die oberen Abdeck-Estrichplatten, vorzugsweise mit gegeneina
versetzten Kanten, auf diese Heiz-Estrichplatten aufgelegt s
und wobei ein Fußbodenbelag auf die Abdeck-Estrichplatten au
gebracht ist.

In einer besonderen Ausführung der Abdeck-Estrichplatten mit
vergüteter Oberfläche kann auf einen weiteren Fußbodenbelag
verzichtet werden.

Die erfindungsgemäßen vorgefertigten Fußbodenplatten werden
Einheit erwärmt und sind von der Isolierung völlig getrennt.
aufwendige Herstellen und Verlegen von mechanisch wenig stal
Isolier-Formplatten entfällt.

Die Erfindung ist in zwei Ausführungsbeispielen in der Zeic
dargestellt und wird daran näher erläutert. Es zeigt:

Figur 1 einen Fußboden mit vorgefertigten Fußbodenplatten n
der Erfindung im Schnitt,

Figur 2 eine Heiz-Estrichplatte nach Figur 1 in Draufsicht,

Figur 3 den Gegenstand von Figur 2 im Schnitt entlang der
Linie III-III,

Figur 4 einen Fußboden mit vorgefertigten Fußbodenplatten nach
einem anderen, bevorzugten Ausführungsbeispiel der
Erfindung im Schnitt,

Figur 5 eine Heiz-Estrichplatte nach Figur 4 in Draufsicht,

Figur 6 den Gegenstand von Figur 5 im Schnitt entlang der
Linie VI-VI.

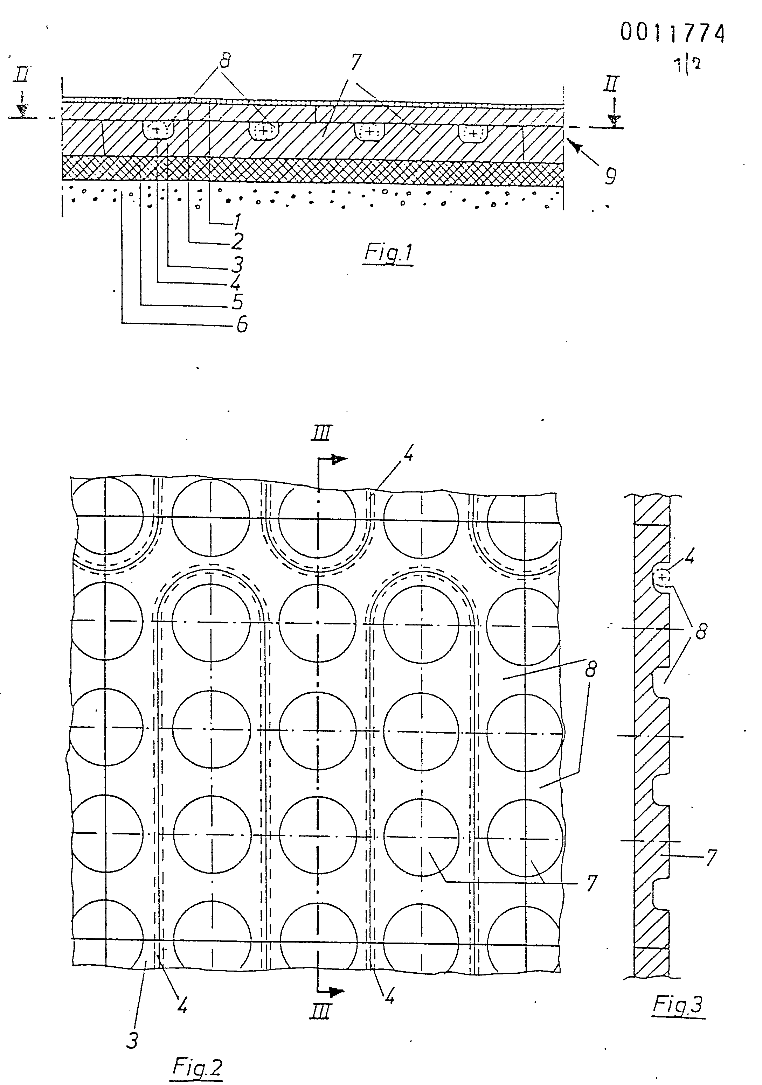

In Figur 1 sind die vorgefertigten Fußbodenplatten mit 9
bezeichnet. Sie bestehen aus unteren Heiz-Estrichplatten 3
und darüberliegenden oberen Abdeck-Estrichplatten 2. Oberhalb
dieser Abdeck-Estrichplatten 2 ist ein Fußbodenbelag 1 angeordnet. Die Heiz-Estrichplatten 3 liegen auf einer Wärme- und
Trittschallisolierung 5 auf, die ihrerseits auf einem Rohfußboden 6 aufliegt. Zwischen Noppen 7 sind eingesenkte Heizkanäle
8 ausgebildet, in welchen sich Heizrohre 4 (gestrichelt eingezeichnet) befinden.

In Figur 2 ist eine Draufsicht auf eine erfindungsgemäße Heiz-
Estrichplatte 3 in Richtung der Pfeile II-II von Figur 1 dargestellt. Zwischen den Noppen 7 erstrecken sich großflächig
die Heizkanäle 8, in welche die Heizrohre 4 in einer bevorzugten
Weise eingelegt sind.

Die Figur 3 ist ein Schnitt durch die in Figur 2 gezeigte
Heiz-Estrichplatte 3 entlang der Linie III-III. Es sind
insbesondere die Noppen 7, Heizkanäle 8 und in diesen verlaufend ein Heizrohr 4 dargestellt.

Bei dem in den Figuren 1 bis 3 dargestellten Ausführungsbeispiel der Erfindung weist lediglich die untere Heiz-Estrichplatte 3 Heizkanäle 8 auf, während die obere Abdeck-Estrichplatte eben ausgebildet ist. Aus diesem Grunde besitzt die untere Heiz-Estrichplatte 3 auch eine größere Dicke als die obere Abdeck-Estrichplatte 2.

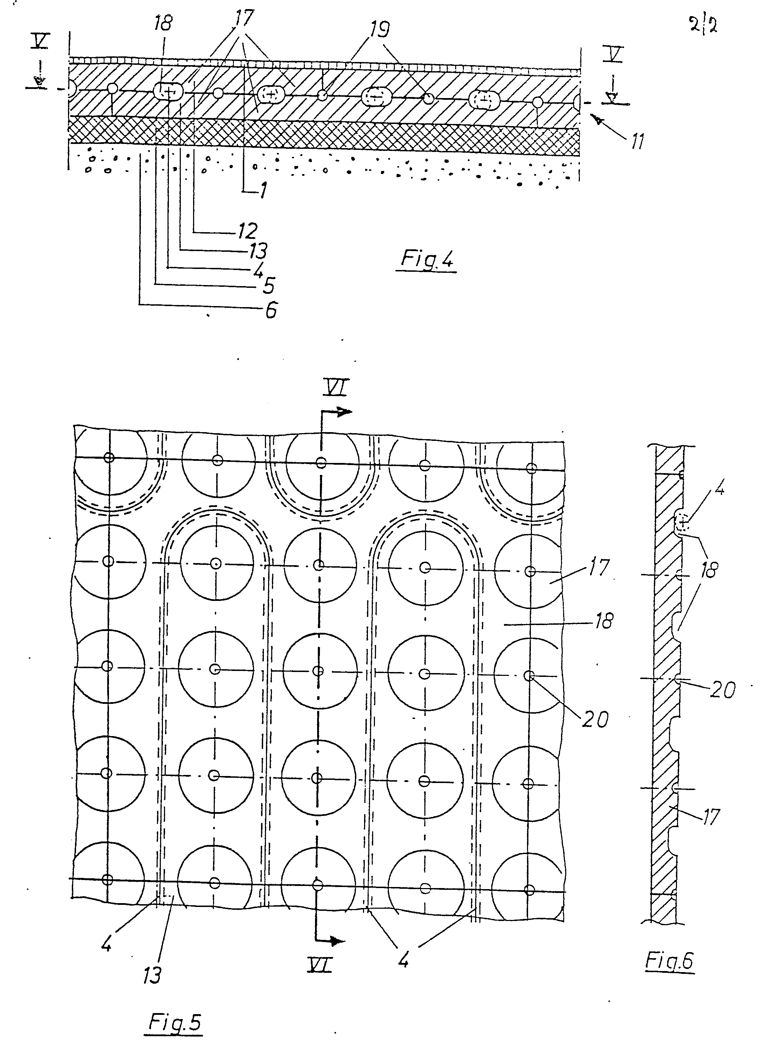

In den Figuren 4 bis 6 ist ein weiteres, bevorzugtes Ausführung beispiel der Erfindung dargestellt.

In Figur 4 sind die vorgefertigten Fußbodenplatten gemäß der Erfindung mit 11 bezeichnet. Sie bestehen aus einer unteren Heiz-Estrichplatte 13 und einer baulich identisch ausgebildeter oberen Abdeck-Estrichplatte 12. Die beiden Platten sind spiegel bildlich versetzt und mit gegeneinander versetzten Kanten dera aufeinander gelegt, daß die Noppen 17 der unteren Platte 13 unter den Noppen 17 der oberen Platte 12 zu liegen kommen. Das Gleiche gilt für die Heizkanäle 18. Wie beim vorhergehenden Au: führungsbeispiel werden die Heizrohre 4 in die Heizkanäle 18 der Heiz-Estrichplatten 13 eingelegt. Diese Heizrohre 4 stehen jedoch etwa zur Hälfte über die Ebene der Heiz-Estrichplatten über, was durch identische Heizkanäle 18 der oberen Abdeck-Est platten 12 ausgeglichen wird.

Um eine genaue Ausrichtung von oberer und unterer Platte 12 bz 13 sowie einen festen Sitz zu ermöglichen, sind in der Mitte d Noppen 17 halbkugelförmige Vertiefungen 20 vorgesehen. Gemäß Figur 4 sind in die Vertiefungen 20 kugelförmige Paßkörper 19 eingelegt. Auf diese Weise werden die obere und die untere Pla 12 bzw. 13 exakt zueinander ausgerichtet, wobei die Kanten gegeneinander versetzt sind und Noppen gegen Noppen sowie Heiz kanäle gegen Heizkanäle stehen.

Die vorgefertigten Fußbodenplatten gemäß der Erfindung sind ebensogut beim Einfamilienhausbau wie bei Großbauten mit gleichem Vorteil einsetzbar, und zwar sowohl für eine Fußbodenheizung als auch für eine Deckenheizung. Die einzelnen Platten k in Großserie hergestellt werden und in einfachster Weise, ent: chend dem Einsatzzweck und der zu belegenden Fläche, verlegt

P a t e n t a n s p r ü c h e

1. Vorgefertigte Fußbodenplatten mit Heizkanälen für Heizrohre, gekennzeichnet durch Heiz-Estrichplatten (3, 13), in welche die Heizkanäle (8, 18) derart eingesenkt sind, daß dazwischen nach oben ragende, vorzugsweise kreisförmige Noppen (7, 17) gebildet sind, und obere Abdeck-Estrichplatten (2, 12).

2. Fußbodenplatten nach Anspruch 1, dadurch gekennzeichnet, daß die Einsenkungen der Heizkanäle (8) so tief sind, daß sie die Heizrohre (4) vollständig aufnehmen können, und daß die Abdeck-Estrichplatten (2) eben sind.

3. Fußbodenplatten nach Anspruch 1, dadurch gekennzeichnet, daß die Heiz-Estrichplatten (13) und die Abdeck-Estrichplatten (12) identischen Aufbau aufweisen, wobei die Heizkanäle (18) halb so tief abgesenkt sind, wie es der Außendicke der Heizrohre (4) entspricht.

4. Fußbodenplatten nach Anspruch 3, dadurch gekennzeichnet, daß in der Mitte der Noppen (17) Vertiefungen (20) zur Aufnahme von Paßkörpern (19) vorgesehen sind.

5. Fußbodenplatten nach einem der Ansprüche 1 bis 4, dadurch gekennzeichnet, daß als Material für die Heiz-Estrichplatten (3, 13) und die Abdeck-Estrichplatten (2, 12) ein Sand-Zement-Estrich, Zement-Beton, Kunstharz-Beton, Asphalt-Beton, Keramik, Kunststein, Gips oder Asbestzement gewählt ist.

6. Fußbodenplatten nach Anspruch 5, dadurch gekennzeichnet, daß die Heiz-Estrichplatten (3, 13) und die Abdeck-Estrichplatten (2, 12) durch ein Gewebe aus Metall, Stahlfasern, Glasfasern, Asbestfasern, Kunststoffasern oder Kohlenstoffasern verstärkt sind.

0011774

7. Fußbodenplatten nach Anspruch 1 bis 4, dadurch gekennzeichnet, daß als Material für die Heiz-Estrichplatten (3, 13) und die Abdeck-Estrichplatten (2, 12) Holz, insbesondere Holzspäne oder eine Mischung aus Zement und Holzspänen, eingesetzt ist.

8. Fußbodenplatten nach Anspruch 1 bis 7, dadurch gekennzeichnet, daß die ebene, oberseitige Fläche der Abdeckplatten vergütet ist und wahlweise mit Mustern und Dekoren versehen ist.

9. Fußbodenplatten nach Anspruch 1 bis 8, dadurch gekennzeichnet, daß die einzelnen Heiz-Estrichplatten (3, 13) und Abdeck-Estrichplatten (2, 12) etwa 20 - 30 mm dick und 500 x 500 mm bis 750 x 750 mm groß sind.

10. Verwendung der vorgefertigten Fußbodenplatten (9, 11) nach einem der Ansprüche 1 bis 9 für einen Fußboden, wobei auf einen Rohfußboden (6) eine Wärme- und Trittschallisolierung (5) aufgebracht ist, auf welche die Heiz-Estrichplatten (3,13) aufgelegt sind, wobei weiterhin die oberen Abdeck-Estrichplatten (2, 12), vorzugsweise mit gegeneinander versetzten Kanten, auf die Heiz-Estrichplatten (3, 13) aufgelegt sind, und wobei ein Fußbodenbelag (1) auf die Abdeck-Estrichplatten (2, 12) aufgebracht ist.

11. Verwendung der vorgefertigten Fußbodenplatten (9, 11) nach Anspruch 10, wobei die Oberfläche der Abdeck-Estrichplatten (2, 12) in der Ausführung nach Anspruch 8 die bereits fertige Fußbodenfläche bildet.

0011774

## Bezugszeichenliste

1    Fußbodenbelag

2    obere Abdeck-Estrichplatte

3    Heizestrichplatte

4    Heizrohr

5    Wärme- und Trittschallisolierung

6    Rohfußboden

7    Noppe

8    Heizkanal

9    vorgefertigte Fußbodenplatten

11   vorgefertigte Fußbodenplatten

12   obere Abdeck-Estrichplatte

13   Heiz-Estrichplatte

17   Noppe

18   Heizkanal

19   Paßkörper

20   Vertiefung

_Fig.1_

_Fig.2_

_Fig.3_

*Fig.4*

*Fig.5*

*Fig.6*

**Europäisches Patentamt**

## EUROPÄISCHER RECHERCHENBERICHT

EP 79 10 .503

| Kategorie | EINSCHLÄGIGE DOKUMENTE Kennzeichnung des Dokuments mit Angabe, soweit erforderlich, der maßgeblichen Teile | betrifft Anspruch |
|---|---|---|
| X | DE - A - 2 602 890 (FEIST) * Seite 4, Absätze 2,3,5; Seite 7, Absatz 1; Figuren 1,2 * | 1,2,5, 7,10 |
| | -- | |
| X | DE - B - 1 784 235 (SCHREIBER) * Ansprüche 1,5,6; Figuren 1-3 * | 1,2,5, 10,11 |
| | -- | |
| | DE - A - 2 030 832 (GERHARD) * Seite 4, Absatz 5; Figur 1 * | 3 |
| | -- | |
| | DE - A - 2 705 146 (MAIER) * Seite 7, Absätze 2,3; einzige Figur * | 10 |
| | ---- | |

**KLASSIFIKATION DER ANMELDUNG (Int.Cl. ³)**

F 24 D 3/00

**RECHERCHIERTE SACHGEBIETE (Int. Cl. ³)**

F 24 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-02-1980 | CRAB |

EPA form 1503.1  06.78